# EUROPEAN PATENT APPLICATION

(11) **EP 4 651 275 A1**
(43) Date of publication of application: **19.11.2025**
(21) Application number: 24877613.0
(22) Date of filing: 10.10.2024
(51) Int. Cl.: H01M 50/143, H01M 50/105, H01M 50/211

(54) **BATTERY CELL AND BATTERY MODULE INCLUDING SAME**

(30) Priority: 11.10.2023 KR 20230134796
(71) Applicant: LG Energy Solution, Ltd., Seoul 07335 (KR)
(72) Inventor: KIM, Hyebin, Daejeon 34122 (KR); LEE, Su Rim, Daejeon 34122 (KR); HA, Jooyeon, Daejeon 34122 (KR)
(74) Representative: Goddar, Heinz J.
(86) International application number: PCT/KR2024/096269
(87) International publication number: WO 2025/080078

(57) **Abstract**

The present disclosure relates to a battery cell and a battery module comprising the same. A battery cell according to an embodiment of the present disclosure includes: an electrode assembly including a cathode, an anode, and a separator; a battery case including a receiving portion that receives the electrode assembly; and a flame-retardant member that is located on an outer surface of the battery case, wherein the receiving portion is one region of the battery case that is molded to protrude toward the outside of the battery case.

## Description

### [TECHNICAL FIELD]

### Cross-Reference to Related Application(s)

This application claims priority to and the benefit of Korean Patent Application No. 10-2023-0134796, filed on October 11, 2023, with the Korean Intellectual Property Office, the disclosure of which is incorporated herein by reference in its entirety.

The present disclosure relates to a battery cell and a battery module comprising the same, and more particularly, to a battery cell having enhanced durability and improved safety and a battery module comprising the same.

### [BACKGROUND]

As technology development and demands for mobile devices increase, the demand for secondary batteries as energy sources is rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium or large-sized battery module are composed of secondary batteries which can be charged and discharged, such a high-output large-capacity secondary battery generates a large amount of heat in a charge and discharge process, so that the electrolyte may vaporize to increase the internal pressure and the battery cell pouch may be torn.

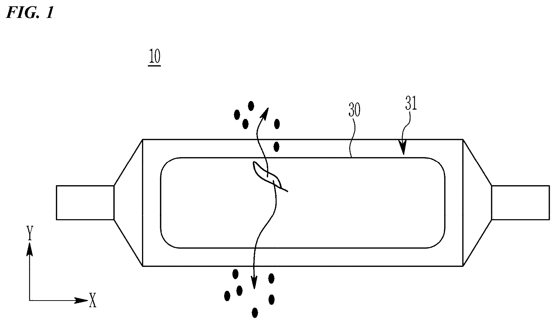

FIG. 1 is a diagram illustrating a conventional battery cell.

Referring to FIG. 1, a conventional battery cell 10 includes an electrode assembly and a battery case 30 that houses the electrode assembly. In this case, in order to receive an electrode assembly having a certain thickness inside the battery case 30, one surface of the battery case 30 may be molded to protrude toward the outside, and one area of the molded battery case 30 may be a protrusion part 31.

In such a conventional battery cell 10, one area of the battery case 30 may be torn due to heat generated in a charge and discharge process of the battery. Specifically, due to the heat generated in a charge and discharge process of the battery, the electrolyte may vaporize to increase the internal pressure of the battery case 30, and as a result, one region of the battery case 30 may be torn, and venting gas may be discharged to the outside. In this case, the battery case 30 may be torn indiscriminately without directionality, but generally, the protrusion part 31, which is relatively less durable than other regions of the battery case 30, is more likely to be torn.

Specifically, the protrusion part 31 of the battery case 30 that protrudes toward the outside may be molded thinner than one area of the battery case 30 that is not molded, and thus its durability may be reduced. Therefore, under the same circumstances, the protrusion part 31 of the battery case 30 can be easily torn compared to other regions, and the venting gas can be discharged to the outside.

As a result, when venting occurs in one battery cell, the high-temperature gas moves to the adjacent battery cell, thereby causing a thermal runaway phenomenon of the battery and deteriorating the safety of the battery. Therefore, there is a growing need to address the above issues.

### [DETAILED DESCRIPTION OF THE INVENTION]

### [Technical Problem]

It is an object of the present disclosure to provide a battery cell having enhanced durability and improved safety and a battery module comprising the same.

However, the technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided a battery cell comprising: an electrode assembly including a cathode, an anode, and a separator; a battery case including a receiving portion that receives the electrode assembly; and a flame-retardant member that is located on an outer surface of the battery case, wherein the receiving portion is one region of the battery case that is molded to protrude toward the outside of the battery case.

The flame-retardant member maybe provided on the receiving portion.

The receiving portion may comprise a corner portion which is an edge region of the receiving portion, and a first surface and a second surface which share the corner portion.

The first surface may be a surface that protrudes toward the outside of the battery case, and the second surface may be a surface that is located perpendicular to the first surface.

The flame-retardant member may be located while covering the corner portion.

The flame-retardant member may be located while covering the first surface and the second surface.

The flame-retardant member may be connected and located while forming one region on the receiving portion.

The flame-retardant member may be applied and located while having a uniform thickness on the battery case.

The flame-retardant member is uniformly applied and located on the battery case while having a thickness of 1 mm or more.

The flame-retardant member may comprise a material that has flame retardancy and adhesiveness.

The flame-retardant member may comprise at least one of an epoxy-based resin and a silicone-based resin.

The flame-retardant member is applied onto the battery case and then cured, and may be located in a state where it is adhesively fixed onto the battery case.

According to another embodiment of the present disclosure, there is provided a battery module comprising the above-mentioned battery cell.

### [BRIEF DESCRIPTION OF THE DRAWING]

FIG. 1 is a diagram illustrating a conventional battery cell.
FIG. 2 is a perspective view of a battery cell according to an embodiment of the present disclosure.
FIG. 3 is an exploded perspective view of a battery cell according to an embodiment of the present disclosure.
FIG. 4 is an enlarged view showing A1 of FIG. 2.
FIG. 5 is a cross-sectional view taken along line B-B' of FIG. 4.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

As used herein, the terms "a first," "a second," etc. are used herein to explain various constitutional elements, and but the elements are not limited by these terms. These terms are only used to distinguish one constitutional element from the other constitutional elements.

Here, the inside direction may mean the direction toward the center of the battery cell, and the outside direction may mean the direction toward the outside of the battery cell. In the same aspect, the inner surface is one surface toward the center of the battery cell, and the outer surface is one side facing the inner surface, which may mean one surface in the outer direction. In this specification, the inside and the outside are distinguished in the same manner unless otherwise specified.

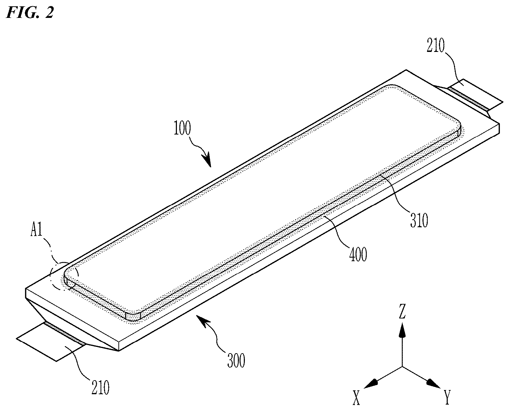

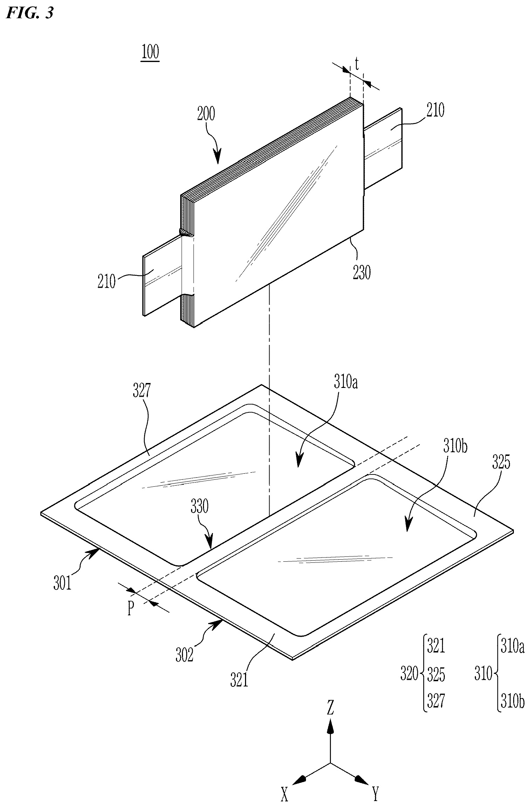

FIG. 2 is a perspective view of a battery cell according to an embodiment of the present disclosure. FIG. 3 is an exploded perspective view of a battery cell according to an embodiment of the present disclosure.

Referring to FIGS. 2 and 3, a battery cell 100 according to an embodiment of the present disclosure comprises an electrode assembly 200 including a cathode, an anode, and a separator, a battery case 300 formed with a receiving portion 310 that receives the electrode assembly 200; and a flame-retardant member 400 that is applied onto an outer surface of the battery case 300.

The electrode assembly 200 may be a stacked electrode assembly 200 in which a plurality of cathode and anode electrodes cut into units of a certain size are stacked in sequence with a separator interposed between them. However, the electrode assembly is not limited thereto, and may also be a winding type assembly having a structure in which a cathode and anode are wound and stacked with a separator between them.

The electrode lead 210 may be electrically connected to the electrode assembly 200. Such electrode leads 210 may be provided in pairs. A portion of the pair of electrode leads 210 may protrude outward from the battery case 300 toward the front and rear directions of the battery case 300 (both ends in the length direction of the electrode assembly, the x-axis direction or the -x-axis direction). The configuration of the battery cell 100 described above is an example, and the shape of the battery cell 100 may be modified in various ways.

The battery case 300 may include a receiving portion 310, a sealing portion 320, and a folding portion 330. The battery case 300 may include a first region 301 and a second region 302 corresponding to each other, and may be formed of a sheet-shaped base material including a first receiving portion 310a located in the first region 301, a second receiving portion 310b located in the second region 302, and a folding portion 330 located between the first receiving portion 310a and the second receiving portion 310b.

The first region 301 and the second region 302 may be divided by the folding portion 330. The first region 301 and the second region 302 may be divided by a central region of the folding portion 330 extending in the x-axis direction.

When manufacturing the battery case 300, a receiving portion 310 in which the electrode assembly 200 is received may be formed in at least one of the first region 301 and the second region 302 through forming. That is, the receiving portion 310 may be a region of the battery case 300 that is formed to protrude toward the outside of the battery case 300 in order to receive the electrode assembly 200.

The receiving portion 310 may include a first receiving portion 310a located in the first region 301 and a second receiving portion 310b located in the second region 302. A portion of the electrode assembly 200 is built in each of the first receiving portion 310a and the second receiving portion 310b, and the first receiving portion 310a and the second receiving portion 310b can be folded so as to face each other with the folding portion 330 in between, thereby enclosing and receiving the electrode assembly 200.

After the receiving portion 310 is formed, the folding portion 330 of the battery case 300 is bent 180 degrees on the basis of the center of the folding portion 330 extending in the x-axis direction to cover the receiving portion 310, thereby completing the structure of the battery case 300.

The folding portion 330 may be a portion that bends the battery case 300. The first region 301 and the second region 302 can contact corresponding to each other along the center of the folding portion 330 extending in the x-axis direction.

The electrode assembly 200 has a planar shape having four sides, and the folding portion 330 can be located at a portion corresponding to one of the four sides. Specifically, the folding portion 330 is in close contact with one side surface 230 of the electrode assembly 200, and the sheet-shaped base material is folded at both edges of the folding portion 330, so that the first receiving portion 310a and the second receiving portion 310b can be folded so as to face each other. Therefore, the width P of the folding portion 330 can be the same as the thickness t of the electrode assembly 200.

The three sides except the side corresponding to the folding portion 330 form a sealing portion 320 where the edges of the first receiving portion 310a and the second receiving portion 310b are joined and sealed. The sealing portion 320 is sealed by a method such as heat sealing.

More specifically, the sheet-shaped base material of the battery case 300 may be formed of a laminate sheet including a metal layer and a resin layer. In particular, the laminate sheet may be an aluminum laminate sheet. The sheet-shaped base material includes a core portion whose material is made of a metal layer, a heat sealing layer formed on one surface of the core portion, and an insulating film formed on the other surface of the core portion.

The heat-sealing layer acts as an adhesive layer using modified polypropylene such as CPP (casted polypropylene), which is a polymer resin, and the insulating film may be formed of a resin material such as nylon or polyethylene terephthalate(PET), but the structure and material of the pouch outer material are not limited here.

In the sealing portion 320, the heat-sealing layers of the first receiving portion 310a and the second receiving portion 310b come into contact with each other, and a heat-sealing process is performed while they are in contact, thereby sealing the battery case 300.

The sealing portion 320 may include a first sealing portion 321, a second sealing portion 325, and a third sealing portion 327.

The first sealing portion 321 and the second sealing portion 325 may be sealing portions 320 located on both sides (x-axis direction or -x-axis direction) of the battery case 300. The first sealing portion 321 may be an edge of one side surface of the battery case 300, and the second sealing portion 325 may be an edge of the other side surface of the battery case 300. The first sealing portion 321 and the second sealing portion 325 may be sealing portions 320 where the electrode lead 210 is located.

The third sealing portion 327 may be a sealing portion 320 facing the folding portion 330. The third sealing portion 327 may be an edge of the sealing portion 320 facing the folding portion 330. The third sealing portion 327 may be a sealing portion 320 where the electrode lead 210 is not located.

After all the sealing portions 320 are sealed, when the battery cell 100 is in a high temperature state, the electrolyte located inside the battery cell 100 vaporizes, whereby the pressure inside the battery cell 100 increases, the battery cell 100 swells up, and the sealed battery case 300 may be torn. In this case, the battery case 300 may be torn, high-temperature particles and gas inside the battery cell 100 may be ejected, and heat can be further transferred to the sealing portion 320 to provide directionality to the ejection of particles and gas.

The flame-retardant member 400 may be provided on the outer surface of the battery case 300. The flame-retardant member 400 may be provided in a region of the outer surface of the battery case 300, and specifically, the flame-retardant member 400 may be provided in the receiving portion 310.

The flame-retardant member 400 is a material having flame retardancy and adhesiveness, and is applied to the battery case 300 and then cured, and is provided in a state of being adhered and fixed on the battery case 300. As an example, the flame-retardant member 400 may be an epoxy-based resin.

Since the flame-retardant member 400 is further provided on the outer surface of the battery case 300, the thickness of the battery case 300 may be secured, thereby improving the durability of the battery. Therefore, when the battery is charged or discharged, the frequency with which the venting gas is discharged to the outside while tearing the battery case 300 can be reduced compared to a conventional case, and thus the safety of the battery can be secured.

The flame-retardant member 400 will be described in more detail below.

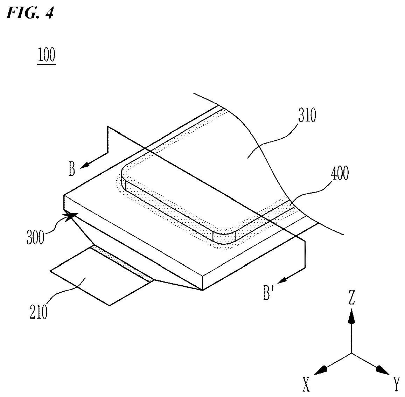

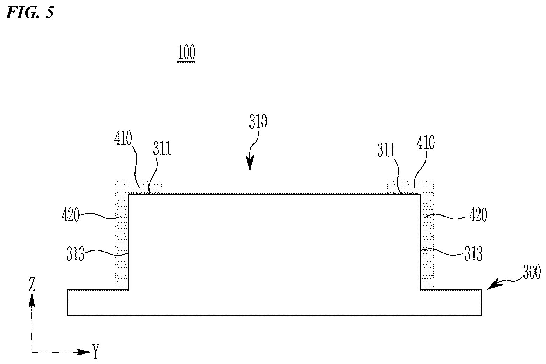

FIG. 4 is an enlarged view showing A1 of FIG. 2. FIG. 5 is a cross-sectional view taken along line B-B' of FIG. 4.

A battery cell 100 according to an embodiment of the present disclosure includes a flame-retardant member 400 provided on the outer surface of the receiving portion 310 of the battery case 300.

The flame-retardant member 400 is located in a region of the battery case 300 formed for receiving the electrode assembly, and may be applied and located in a portion of the battery case 300 where durability is weakened.

Specifically, the flame-retardant member 400 may be provided in an edge region of the receiving portion 310 that protrudes toward the outside. More specifically, the flame-retardant member 400 may be provided in a corner portion 311, which is a protruding edge region of the receiving portion 310.

The corner portion 311 may be an edge region that determines the overall shape of the receiving portion 310, which is a region of the battery case 300 that protrudes outward. The corner portion 311 may be formed on the battery case 300 while having a shape corresponding to the shape of the electrode assembly. In the present disclosure, the corner portion 311 corresponds to a rectangle, but is not limited thereto.

The flame-retardant member 400 may be applied and located in a region of the receiving portion 310 including the corner portion 311.

The receiving portion 310 may include a first surface 312 and a second surface 313 that share the corner portion 311. Here, the first surface 312 may mean a surface that protrudes toward the outside of the battery case 300, and the second surface 313 may mean a side surface that is located perpendicular to the first surface 312.

The flame-retardant member 400 may be located on the corner portion 311, the first surface 312, and the second surface 313 of the receiving portion 310. In this case, the flame-retardant member 400 may be located while covering the entire first surface 312, or may be located while covering only a portion of the first surface 312 as in this figure. In addition, the flame-retardant member 400 may be located while covering the entire second surface 313 as in this figure, or may be located while covering only a partial region of the second surface 313.

However, when the battery case 300 is molded, since the corner portion 311 of the receiving portion 310 is formed to have the thinnest thickness, it is necessary to further apply the flame-retardant member 400 to the corner portion 311, thereby ensuring the durability of the battery. Therefore, the flame-retardant member 400 covers the corner portion 311, and thus should be located on the first surface 312 and the second surface 313 connected to the corner portion 311.

In other words, the flame-retardant member 400 can be connected and located while forming one region on the receiving portion 310. However, the flame-retardant member 400 may be applied to a region where durability needs to be further supplemented after being applied as described above.

Such a flame-retardant member 400 may be uniformly applied to the corner portion 311, the first surface 312, and the second surface 313. For example, the flame-retardant member 400 may be uniformly applied and located while having a thickness of 1 mm or more. Therefore, when battery cells are stacked to form a battery module or a battery pack, the stacking ratio may be improved while reducing the assembly tolerance within the module or pack case.

The flame-retardant member 400 may include a flame-retardant epoxy resin, and the flame-retardant epoxy resin may mean a level that satisfies the flame retardancy evaluation standard UL-94 test. Specifically, the flame-retardant member 400 may include an aromatic series, which is a general flame-retardant epoxy resin, but is not limited thereto, and may also include a silicone-based resin. That is, the flame-retardant member 400 may include at least one of an epoxy-based resin and a silicone-based resin. The flame-retardant resins can have a heat-resistant temperature of 150°C or more.

In summary, a flame-retardant member 400 is further located on the outer surface of the receiving portion 310 of the battery case 300, thereby improving the durability of a region of the battery case 300 that has been weakened by the reduction in thickness due to the molding of the battery case 300. Therefore, even if the electrolyte vaporizes due to heat generated by charging and discharging the battery to increase the internal pressure of the battery case 300, the phenomenon in which the battery case 300 is torn and venting gas is discharged to the outside can be suppressed, and thermal runaway phenomenon can be prevented, thereby improving the safety of the battery.

Furthermore, since the flame-retardant member 400 is applied to the outer surface of the battery case 300 with a certain thickness, and is not applied to the inner surface of the battery case 300, it may not affect the energy density of the battery. That is, since the flame-retardant member 400 is not applied to the inner surface of the receiving portion 310 where the electrode assembly is received, it may not affect the energy density of the electrode assembly. Therefore, the durability of the battery case 300 is improved while maintaining the energy density of the battery, so that the safety of the battery can be secured more effectively.

The above-mentioned battery cell and battery module including the same can be applied to battery packs and various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

While preferred embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery cell
200: electrode assembly
300: battery case
310: receiving portion
310a: first receiving portion
310b: second receiving portion
311: corner portion
312: first surface
313: second surface
320: sealing portion
330: folding portion
400: flame-retardant member

### [Industrial Applicability]

According to the embodiments, the battery cell of the present disclosure can enhance the durability of the battery case, thereby improving the safety of the battery cell.

In addition, according to the embodiments, the battery cell of the present disclosure can secure a space in which the electrode assembly is received, thereby securing the energy density of the battery.

The effects of the present disclosure are not limited to those described above, and other effects that are not described herein may clearly be understood by one of ordinary skill in the art from the claims set forth herein.

## Claims

1. A battery cell comprising:
an electrode assembly including a cathode, an anode, and a separator;
a battery case including a receiving portion that receives the electrode assembly; and
a flame-retardant member that is located on an outer surface of the battery case,
wherein the receiving portion is one region of the battery case that is molded to protrude toward an outside of the battery case.

2. The battery cell according to claim 1,
wherein the flame-retardant member is provided on the receiving portion.

3. The battery cell according to claim 1,
wherein the receiving portion comprises,
a corner portion which is an edge region of the receiving portion, and
a first surface and a second surface which share the corner portion.

4. The battery cell according to claim 3,
wherein the first surface is a surface that protrudes toward the outside of the battery case, and
the second surface is a surface that is located perpendicular to the first surface.

5. The battery cell according to claim 3,
wherein the flame-retardant member is located while covering the corner portion.

6. The battery cell according to claim 5,
wherein the flame-retardant member is located while covering the first surface and the second surface.

7. The battery cell according to claim 6,
wherein the flame-retardant member is connected and located while forming one region on the receiving portion.

8. The battery cell according to claim 1,
wherein the flame-retardant member is applied and located while having a uniform thickness on the battery case.

9. The battery cell according to claim 8,
wherein the flame-retardant member is uniformly applied and located on the battery case while having a thickness of 1 mm or more.

10. The battery cell according to claim 1,
wherein the flame-retardant member comprises a material that has flame retardancy and adhesiveness.

11. The battery cell according to claim 10,
wherein the flame-retardant member comprises at least one of an epoxy-based resin and a silicone-based resin.

12. The battery cell according to claim 1,
wherein the flame-retardant member is applied onto the battery case and then cured, and is located in a state where it is adhesively fixed onto the battery case.

13. A battery module comprising the battery cell according to claim 1.
